# EUROPÄISCHE PATENTSCHRIFT

(11) **EP 3 046 704 B1**
(45) Veröffentlichungstag und Bekanntmachung des Hinweises auf die Patenterteilung: **01.11.2023**
(21) Anmeldenummer: 14771830.8
(22) Anmeldetag: 15.09.2014
(51) Int. Cl.: B22F 7/02, C22C 33/02, B22F 1/00, B22F 3/105, B22F 1/05, B22F 10/20, B22F 10/28, B22F 10/34

(54) **METALLPULVER FÜR PULVERBASIERTE FERTIGUNGSPROZESSE UND VERFAHREN ZUR HERSTELLUNG EINES METALLISCHEN BAUTEILS AUS METALLPULVER**
METAL POWDER FOR POWDER-BASED PRODUCTION PROCESSES AND METHOD FOR PRODUCTION OF A METALLIC COMPONENT FROM METAL POWDER
POUDRE MÉTALLIQUE UTILISÉE POUR DES PROCESSUS DE FABRICATION À BASE DE POUDRE, ET PROCÉDÉ DE FABRICATION D'UNE PIÈCE MÉTALLIQUE À PARTIR DE POUDRE MÉTALLIQUE

(30) Priorität: 20.09.2013 DE 102013110417
(43) Veröffentlichungstag der Anmeldung: 27.07.2016
(73) Patentinhaber: ThyssenKrupp Steel Europe AG, 47166 Duisburg (DE)
(72) Erfinder: FECHTE-HEINEN, Rainer, 46238 Bottrop (DE); MAYER, Stefan, 58239 Schwerte (DE); OFFERGELD, Andreas, 40882 Ratingen (DE); PATBERG, Lothar, 47445 Moers (DE); COTT, Andreas, 44263 Dortmund (DE)
(74) Vertreter: Cohausz & Florack
(86) Internationale Anmeldenummer: PCT/EP2014/069603
(87) Internationale Veröffentlichungsnummer: WO 2015/039986

(56) Entgegenhaltungen:
- JP-B2- 3 272 886
- JP-B2- 3 272 886
- US-A1- 2010 116 088
- A SIMCHI ET AL: "Effects of laser sintering processing parameters on the microstructure and densification of iron powder", MATERIALS SCIENCE AND ENGINEERING A, Bd. 359, Nr. 1-2, 1. Oktober 2003 (2003-10-01), Seiten 119-128, XP055165387, ISSN: 0921-5093, DOI: 10.1016/S0921-5093(03)00341-1

## Beschreibung

Die Erfindung betrifft ein Metallpulver für pulverbasierte Fertigungsprozesse, bei denen aus dem Metallpulver ein Bauteil schichtweise oder als kompaktierter Grünling aufgebaut und durch Schweißen oder Sintern verfestigt wird. Ferner betrifft die Erfindung ein Verfahren zur Herstellung eines metallischen Bauteils, bei dem das Bauteil aus Metallpulver aufgebaut und durch schichtweises Schweißen oder Sintern verfestigt wird, sowie eine Verwendung des Metallpulvers in einem solchen Verfahren.

Pulverbasierte Fertigungsprozesse umfassen insbesondere additive Fertigungsprozesse sowie Sinterverfahren. Unter dem Begriff "additive Fertigungsprozesse" - auch "generative Fertigungsverfahren" genannt - werden Verfahren zur schnellen und kostengünstigen Fertigung von Modellen, Prototypen, Werkzeugen und Endprodukten verstanden, bei denen auf der Basis rechnerimplementierter Datenmodelle aus formlosem oder formneutralem Material, z.B. Pulver oder Draht, dreidimensionale Werkstücke oder Bauteile durch schichtweises Aufbauen und Verfestigen des Materials direkt gefertigt werden. Diese Verfahren, zu denen unter anderem das selektive Laserschmelzen, mitunter auch als "selektives Lasersintern" bezeichnet, gehört, sind wirtschaftlich durchführbar bei der Fertigung kleiner Stückzahlen von Bauteilen mit komplexer Geometrie.

Ferner sind Sinterverfahren bekannt, bei denen Metallpulver zu Grünlingen verpresst und anschließend durch eine entsprechende Wärmebehandlung verfestigt wird.

Die Anwendungsgebiete für diese pulverbasierten, insbesondere additiven Fertigungsprozesse, die sich am Anfang auf das Herstellen von Modellen und Prototypen konzentrierten und daher als "Rapid-Prototyping" bezeichnet werden, wurden in den letzten Jahren auf weitere Anwendungsfelder ausgedehnt. So geht der Trend inzwischen dahin, diese Technologie auch zur schnellen Herstellung von Werkzeugen ("Rapid-Tooling") sowie von Funktionsbauteilen ("Rapid-Manufacturing" bzw. "Direct-Manufacturing") zu nutzen.

Für Prototypen und Werkstücke aus Kunststoff sind sogenannte 3D-Drucker etabliert; für Prototypen und Werkstücke aus Metall wird typischerweise Metallpulver schichtweise aufgebracht, wobei zwischen dem Aufbringen der Schichten beispielsweise mittels selektivem Laserschmelzen der jeweilige in der Schicht liegende Querschnitt verfestigt und somit das Werkstück schichtweise aufgebaut wird. Im Stand der Technik sind für derartige Anwendungen neben Kunststoffen bislang nur Edelstahl- und Werkzeugstahl-, Aluminium-, Titan- und Supernickellegierungspulver verfügbar. Das Schmelzen bzw. Verschweißen dieser Metallpulver ist jedoch insoweit schwierig, als dass dabei ein vergleichsweise enges Prozessfenster bezüglich der Schweißparameter einzuhalten ist. Zudem sind diese Metallpulver relativ teuer.

Aus JP 3272886 B2 ist ein Pulver zum Sintern hochfester Stahlbauteile bekannt, welches 0,5 - 2 Gew.-% Cr, bis zu 0,08 Gew.-% Mn, 0,1 - 0,6 Gew.-% Mo, bis zu 0,015 Gew.-% P, 0,05 - 0,5 Gew.-% V, bis zu 0,015 Gew.-% S, Rest Eisen und unvermeidbare Verunreinigungen enthält. Dabei wird das Pulver bei Temperaturen zwischen 1100 und 1300 °C gesintert und in einem Temperaturbereich zwischen 800 und 400 °C mit einer Abkühlrate von höchstens 1 °C/s abgekühlt. Das Pulver kann als weitere Bestandteile Nb, Ti, Cr, W, B, Ni oder Cu enthalten.

Der vorliegenden Erfindung lag die Aufgabe zugrunde, ein Metallpulver der eingangs genannten Art zu schaffen, welches die Herstellung von Bauteilen durch additive Fertigungsverfahren ermöglicht, gut schweißbar und kostengünstig herstellbar ist. Ferner lag der Erfindung die Aufgabe zugrunde, ein Verfahren zur Herstellung eines metallischen Bauteils anzugeben, bei dem das Bauteil schichtweise aus Metallpulver aufgebaut und die jeweilige Metallpulverschicht durch Schweißen oder Sintern verfestigt wird. Auch lag der Erfindung die Aufgabe zugrunde, eine Verwendung für ein schweißbares Metallpulver anzugeben.

Gemäß einer ersten Lehre der vorliegenden Erfindung wird die oben aufgezeigte Aufgabe hinsichtlich des Metallpulvers dadurch gelöst, dass das Metallpulver eine Korngrößenverteilung im Bereich von 5 - 150 µm aufweist und hauptsächlich Eisen und unvermeidbare Verunreinigungen enthält,
wobei das Metallpulver ein aus mikrolegiertem Stahl, weichem IF-Stahl oder höherfestem IF-Stahl hergestelltes Stahlpulver ist, wobei
das Stahlpulver aus mikrolegiertem Stahl folgende Zusammensetzung aufweist:

| | |
|---|---|
| C: | 0,01 - 0,2 Gew.-% |
| N: | 0 - 0,02 Gew.-% |
| Ti: | 0,005 - 0,15 Gew.-% |
| Nb: | 0,002 - 0,1 Gew.-% |
| V: | 0,005 - 0,15 Gew.-%, |

wobei der Massenanteil der Elemente Titan, Niob und Vanadium in Summe kleiner als 0,3 Gew.-%, vorzugsweise kleiner als 0,22 Gew.-% ist,
Rest Eisen und unvermeidbare Verunreinigungen,
das Stahlpulver aus weichem IF-Stahl folgende Zusammensetzung aufweist:

| | |
|---|---|
| C: | 0,001 - 0,2 Gew.-% |
| Ti: | 0,005 - 0,15 Gew.-% |
| Nb: | 0,002 - 0,1 Gew.-% |
| V: | 0,005 - 0,15 Gew.-% |

Rest Eisen und unvermeidbare Verunreinigungen, und
das Stahlpulver aus höherfestem IF-Stahl folgende Zusammensetzung aufweist:

| | |
|---|---|
| C: | 0,001 - 0,1 Gew.-% |
| Ti: | 0,02 - 0,15 Gew.-% |
| Nb: | 0,01 - 0,1 Gew.-% |
| V: | 0,005 - 0,15 Gew.-% |

Rest Eisen und unvermeidbare Verunreinigungen.

Das erfindungsgemäße Metallpulver lässt sich kostengünstig herstellen und besitzt aufgrund seines hohen Fe-Anteils bzw. seines vorzugsweise niedrigen Kohlenstoffäquivalents und niedrigem Legierungsgehalts im Vergleich zu Edel- und Werkzeugstählen eine sehr gute bis gute Schweißeignung, durch welche additive Fertigungsverfahren, wie selektives Laserschmelzen, Auftragsschweißen, selektives Elektronenstrahlschweißen und dergleichen, begünstigt werden. Ein niedriges Kohlenstoffäquivalent ergibt ein größeres Prozessfenster in den Schweißparametern und der Kornfraktion, sowie eine höhere Dichte und damit höhere Qualität des aus dem Metallpulver erzeugten Bauteils.

Ein weiterer Vorteil des erfindungsgemäßen Metallpulvers liegt in der guten Bearbeitbarkeit eines daraus durch additive Fertigung herstellbaren Bauteils. Durch die gute Bearbeitbarkeit wird die Nach- bzw. Weiterverarbeitung des Bauteils, wie beispielsweise ein Umformen und/oder eine spanende Bearbeitung erleichtert. Durch die günstigen Materialkosten des erfindungsgemäßen Metallpulvers wird ein wirtschaftlicher Einsatz von additiven Fertigungsverfahren auch im sogenannten "Rapid-Manufacturing" bzw. "Direct-Manufacturing" ermöglicht. Durch das erfindungsgemäße Metallpulver können somit neue Anwendungen der additiven Fertigungsverfahren, zum Beispiel in der Automobilindustrie erschlossen werden.

Nach einer bevorzugten Ausgestaltung liegt die Kornfraktion (Korngrößenverteilung) des erfindungsgemäßen Metallpulvers im Bereich von 10 - 60 µm, insbesondere im Bereich von 10 - 36 µm oder im Bereich von 25 - 45 µm.

Geeignete Verfahren zur Herstellung des erfindungsgemäßen Metallpulvers sind unter anderem die Wasserverdüsung, die Luftverdüsung und die Inertgasverdüsung, wobei zur Herstellung des erfindungsgemäßen Metallpulvers die Wasserverdüsung bevorzugt wird.

Titan ist ein starkes Desoxydationsmittel. Es verbessert insbesondere die Korrosionsbeständigkeit des aus dem Metallpulver im additiven Fertigungsprozess hergestellten Bauteils.

Niob verbessert die Schweißbarkeit des Metallpulvers bzw. des aus dem Metallpulver im additiven Fertigungsprozess hergestellten Bauteils. Darüber hinaus führt das Zulegieren von Niob zur Erhöhung der chemischen Beständigkeit und Warmfestigkeit des Bauteils.

Vanadium bindet Stickstoff und bewirkt eine feinkörnige Gussstruktur. Es erhöht den Verschleißwiderstand durch harte Karbide, sowie die Warmfestigkeit und Anlassbeständigkeit des aus dem Metallpulver im additiven Fertigungsprozess hergestellten Bauteils. Insbesondere in Verbindung mit Chrom führt Vanadium zu einer Erhöhung der Zähigkeit und damit zu einer erhöhten mechanischen Festigkeit des Bauteils.

Gemäß einer zweiten Lehre der vorliegenden Erfindung wird die oben aufgezeigte Aufgabe hinsichtlich des Verfahrens dadurch gelöst, dass als Metallpulver ein Metallpulver nach Anspruch 1 oder 2 verwendet wird.

Gemäß einer dritten Lehre der vorliegenden Erfindung wird die oben aufgezeigte Aufgabe hinsichtlich der Verwendung eines schweißbaren Metallpulvers dadurch gelöst, dass ein Metallpulver nach Anspruch 1 oder 2 in einem pulverbasierten Fertigungsprozess verwendet wird, bei dem aus dem Metallpulver ein Bauteil schichtweise aufgebaut und durch selektives Verschweißen verfestigt wird.

Nachfolgend wird die Erfindung nun anhand von Ausführungsbeispielen näher erläutert.

Mittels Wasser-, Luft- oder Inertgasverdüsung wird Stahlpulver hergestellt, dessen Kornfraktionen (Korngrößenverteilungen) im Bereich von 5 bis 150 µm, vorzugsweise im Bereich von 10 bis 60 µm, besonders bevorzugte im Bereich von 10 bis 45 µm liegen.

Der als pulverförmiges Halbzeug vorliegende Stahl enthält neben Eisen und unvermeidbaren Verunreinigungen nur einen geringen Massenanteil an Legierungselementen.

Das erfindungsgemäße Stahlpulver wird aus niedrig legiertem Stahl hergestellt, nämlich aus mikrolegiertem Stahl, weichem IF-Stahl oder höherfestem IF-Stahl.

Zur Herstellung von Bauteilen aus dem pulverförmigen metallischen Halbzeug unter Anwendung eines additiven Fertigungsverfahrens der eingangs genannten Art, beispielsweise des selektiven Laserschmelzverfahrens, können erfindungsgemäß auch Pulvergemische aus mehreren verschiedenen Legierungen oder Pulver mit Zugabe von weiteren Legierungselementen zur direkten Weiterverarbeitung verwendet werden.

Erfindungsgemäßes Stahlpulver aus mikrolegiertem Stahl besitzt folgende Zusammensetzung:

| | |
|---|---|
| C: | 0,01 - 0,2 Gew.-% |
| N: | 0 - 0,02 Gew.-% |
| Ti: | 0,005 - 0,15 Gew.-% |
| Nb: | 0,002 - 0,1 Gew.-% |
| V: | 0,005 - 0,15 Gew.-% |

Rest Eisen und unvermeidbare Verunreinigungen.

Alternativ kann das Stahlpulver aus mikrolegiertem Stahl auch folgende Zusammensetzung aufweisen:

| | |
|---|---|
| C: | 0,01 - 0,1 Gew.-% |
| N: | 0 - 0,01 Gew.-% |
| Ti: | 0,005 - 0,1 Gew.-% |
| Nb: | 0,002 - 0,1 Gew.-% |
| V: | 0,005 - 0,02 Gew.-% |

Rest Eisen und unvermeidbare Verunreinigungen.

Bauteile, die erfindungsgemäß aus pulverförmigem mikrolegierten Stahl (PAS, MHZ) hergestellt werden, haben ein feinkörniges ferritisch-perlitisches Gefüge mit Ti- und Nb-Carbonitridausscheidungen zur Realisierung einer hohen Bauteilfestigkeit. Der Anteil der Legierungselemente Titan, Niob und Vanadium ist bei diesem Stahlpulver bzw. Bauteil in der Summe kleiner als 0,3 Gew.-%, vorzugsweise kleiner 0,22 Gew.-%.

Mikrolegierte Stähle sind weniger verformbar als IF-Stähle, deren ferritische Matrix keine interstiell gelösten Kohlenstoff- oder Stickstoffatome enthält (IF = "Interstitial free"). Mikrolegierte Stähle verfügen über höhere mechanische Kennwerte und eignen sich somit insbesondere zur Anwendung in hoch belasteten Strukturbauteilen, beispielsweise in Karosseriebauteilen oder tragenden Bauteilen von Lastkraftwagen-Fahrwerken.

Erfindungsgemäßes Stahlpulver aus weichem IF-Stahl weist folgende Zusammensetzung auf:

| | |
|---|---|
| C: | 0,001 - 0,2 Gew.-% |
| Ti: | 0,005 - 0,15 Gew.-% |
| Nb: | 0,002 - 0,1 Gew.-% |
| V: | 0,005 - 0,15 Gew.-% |

Rest Eisen und unvermeidbare Verunreinigungen.

Alternativ kann das Stahlpulver aus weichem IF-Stahl auch folgende Zusammensetzung aufweisen:

| | |
|---|---|
| C: | 0,001- 0,1 Gew.-% |
| Ti: | 0,02 - 0,1 Gew.-% |
| Nb: | 0,01 - 0,06 Gew.-% |
| V: | 0,005 - 0,15 Gew.-% |

Rest Eisen und unvermeidbare Verunreinigungen.

Erfindungsgemäße Stahlpulver aus weichen IF-Stählen (DC, DX) verfügen über geringe Anteile von Titan, Niob und Vanadium als Legierungselemente, um unvermeidbare Verunreinigungen aus Kohlenstoff, Stickstoff und Bor beim Erstarren zu binden.

IF-Stähle stellen die weichste Eisenbasislegierung dar. Sie sind magnetisch, sehr gut induktiv erwärmbar, auch nach der additiven Bauteilherstellung sehr gut umformbar, einfach nachbearbeitbar und aufgrund der wenigen Legierungselemente kostengünstig.

Weiche IF-Stahl-Pulver bieten sich zur additiven Fertigung von Bauteilen mit besonders hohem Kostendruck an, oder bei der additiven Fertigung von Halbzeugen, die in der weiteren Verarbeitung noch umgeformt werden. Anwendungsmöglichkeiten für weiche IF-Stahl-Pulver liegen insbesondere in der additiven Fertigung von Gehäusen und Außenhautteilen. Dabei können durch die additive Fertigung an der Innenseite oder an bestimmten Stellen der Bauteile, Gehäuse und/oder Außenhautteile Funktionselemente, wie z.B. Fügestellen, Lageraugen, Versteifungsrippen, etc. erzeugt werden.

Die ferritische Matrix von höherfesten IF-Stählen (HX ...Y) ist weitgehend frei von Kohlenstoffausscheidungen (Karbiden). Kohlenstoff und Stickstoff sind bei diesen Stählen durch Mikrolegierungselemente abgebunden. Das Stahlpulver verfügt dabei über einen höheren Anteil von Titan, Niob und Vanadium als Legierungselemente, um die Streckgrenze zu erhöhen. Bauteile aus höherfestem IF-Stahl-Pulver besitzen eine höhere Streckgrenze als Bauteile aus weichem IF-Stahl-Pulver, besitzen aber noch immer gute Umformungseigenschaften und können als Strukturbauteile Anwendung finden.

Erfindungsgemäßes Stahlpulver aus höherfestem IF-Stahl weist folgende Zusammensetzung auf:

| | |
|---|---|
| C: | 0,001 - 0,1 Gew.-% |
| Ti: | 0,02 - 0,15 Gew.-% |
| Nb: | 0,01 - 0,1 Gew.-% |
| V: | 0,005 - 0,15 Gew.-% |

Rest Eisen und unvermeidbare Verunreinigungen.

Alternativ kann das Stahlpulver aus höherfestem IF-Stahl auch folgende Zusammensetzung aufweisen:

| | |
|---|---|
| C: | 0,001 - 0,06 Gew.-% |
| Ti: | 0,02 - 0,15 Gew.-% |
| Nb: | 0,01 - 0,04 Gew.-% |
| V: | 0,005 - 0,01 Gew.-% |

Rest Eisen und unvermeidbare Verunreinigungen.

## Patentansprüche

1. Metallpulver für pulverbasierte Fertigungsprozesse, bei denen aus dem Metallpulver ein Bauteil schichtweise oder als kompaktierter Grünling aufgebaut und durch Schweißen oder Sintern verfestigt wird,
**dadurch gekennzeichnet, dass** das Metallpulver eine Korngrößenverteilung im Bereich von 5 -150 µm aufweist und hauptsächlich Eisen und unvermeidbare Verunreinigungen enthält,
wobei das Metallpulver ein aus mikrolegiertem Stahl, weichem IF-Stahl oder höherfestem IF-Stahl hergestelltes Stahlpulver ist, wobei das Stahlpulver aus mikrolegiertem Stahl folgende Zusammensetzung aufweist:
| | |
|---|---|
| C: | 0,01 - 0,2 Gew.-% |
| N: | 0 - 0,02 Gew.-% |
| Ti: | 0,005 - 0,15 Gew.-% |
| Nb: | 0,002 - 0,1 Gew.-% |
| V: | 0,005 - 0,15 Gew.-%, |
wobei der Massenanteil der Elemente Titan, Niob und Vanadium in Summe kleiner als 0,3 Gew.-%, vorzugsweise kleiner als 0,22 Gew.-% ist,
Rest Eisen und unvermeidbare Verunreinigungen,
das Stahlpulver aus weichem IF-Stahl folgende Zusammensetzung aufweist:
| | |
|---|---|
| C: | 0,001 - 0,2 Gew.-% |
| Ti: | 0,005 - 0,15 Gew.-% |
| Nb: | 0,002 - 0,1 Gew.-% |
| V: | 0,005 - 0,15 Gew.-% |
Rest Eisen und unvermeidbare Verunreinigungen, und
das Stahlpulver aus höherfestem IF-Stahl folgende Zusammensetzung aufweist:
| | |
|---|---|
| C: | 0,001 - 0,1 Gew.-% |
| Ti: | 0,02 - 0,15 Gew.-% |
| Nb: | 0,01 - 0,1 Gew.-% |
| V: | 0,005 - 0,15 Gew.-% |
Rest Eisen und unvermeidbare Verunreinigungen.

2. Metallpulver nach Anspruch 1,
**dadurch gekennzeichnet, dass** es eine Korngrößenverteilung im Bereich von 10 - 60 µm, vorzugsweise im Bereich von 10 - 36 µm oder im Bereich von 25 - 45 µm aufweist.

3. Verfahren zur Herstellung eines metallischen Bauteils, bei dem das Bauteil aus Metallpulver aufgebaut und durch schichtweises Schweißen oder Sintern verfestigt wird, **dadurch gekennzeichnet, dass** als Metallpulver ein Metallpulver nach Anspruch 1 oder 2 verwendet wird.

4. Verwendung eines Metallpulvers nach Anspruch 1 oder 2 in einem pulverbasierten Fertigungsprozess, bei dem aus dem Metallpulver ein Bauteil aufgebaut und durch schichtweises Schweißen oder Sintern verfestigt wird.

## Claims

1. Metal powder for powder-based production processes in which a component is built up from the metal powder in layers or as a compacted green compact and consolidated by welding or sintering,
**characterized in that** the metal powder has a grain size distribution in the range of 5 - 150 µm and contains mainly iron and unavoidable impurities,
wherein the metal powder is a steel powder made of micro-alloyed steel, soft IF steel or higher strength IF steel, wherein
the micro-alloyed steel powder has the following composition:
| | |
|---|---|
| C: | 0.01 - 0.2 wt.%. |
| N: | 0 - 0.02 wt.% |
| Ti: | 0.005 - 0.15 wt.% |
| Nb: | 0.002 - 0.1 wt.% |
| V: | 0.005 - 0.15 wt.%, |
the mass fraction of the elements titanium, niobium and vanadium being in total less than 0.3 wt.%, preferably less than 0.22 wt.%,
balance iron and unavoidable impurities,
the steel powder of soft IF steel has the following composition:
| | |
|---|---|
| C: | 0.001- 0.2% wt.% |
| Ti: | 0.005 - 0.15 wt.% |
| Nb: | 0.002 - 0.1 wt.% |
| V: | 0.005 - 0.15 wt.% |
balance iron and unavoidable impurities, and
the steel powder of higher strength IF steel has the following composition:
| | |
|---|---|
| C: | 0.001- 0.1 wt.%. |
| Ti: | 0.02 - 0.15 wt.% |
| Nb: | 0.01 - 0.1 wt.% |
| V: | 0.005 - 0.15 wt.% |
balance iron and unavoidable impurities.

2. Metal powder according to claim 1,
**characterized in that** it has a grain size distribution in the range of 10 - 60 µm, preferably in the range of 10 - 36 µm or in the range of 25 - 45 µm.

3. Method for producing a metallic component, in which the component is built up from metal powder and is consolidated by layer-by-layer welding or sintering, **characterized in that** the metal powder used is a metal powder according to claim 1 or 2.

4. Use of a metal powder according to claim 1 or 2 in a powder-based production process, in which a component is built up from the metal powder and consolidated by layer-by-layer welding or sintering.

## Revendications

1. Poudre métallique pour des processus de fabrication à base de poudre, dans lesquels une pièce est confectionnée par couches ou comme ébauche compacte à partir de la poudre métallique et est consolidée par soudage ou frittage, **caractérisée en ce que** la poudre métallique présente une granulométrie de l'ordre de 5 à 150 µm et contient essentiellement du fer et des impuretés inévitables,
dans laquelle la poudre métallique est une poudre d'acier fabriquée à partir d'acier micro-allié, d'acier IF tendre ou d'acier IF à haute résistance, dans laquelle la poudre d'acier en acier micro-allié présente la composition suivante:
| | |
|---|---|
| C : | 0,01 à 0,2 % en poids |
| N : | 0 à 0,02 % en poids |
| Ti : | 0,005 à 0,15 % en poids |
| Nb : | 0,002 à 0,1 % en poids |
| V : | 0,005 à 0,15 % en poids, |
dans laquelle la part de masse des éléments titane, niobium et vanadium au total est inférieure à 0,3 % en poids, de préférence, inférieure à 0,22 % en poids,
le reste étant du fer et des impuretés inévitables,
la poudre d'acier en acier IF tendre présente la composition suivante:
| | |
|---|---|
| C : | 0,001 à 0,2 % en poids |
| Ti : | 0,005 à 0,15 % en poids |
| Nb : | 0,002 à 0,1 % en poids |
| V : | 0,005 à 0,15 % en poids, |
le reste étant du fer et des impuretés inévitables, et
la poudre d'acier en acier IF à haute résistance présente la composition suivante:
| | |
|---|---|
| C : | 0,001 à 0,1 % en poids |
| Ti : | 0,02 à 0,15 % en poids |
| Nb : | 0,01 à 0,1 % en poids |
| V : | 0,005 à 0,15 % en poids, |
le reste étant du fer et des impuretés inévitables.

2. Poudre métallique selon la revendication 1,
**caractérisée en ce qu'**elle présente une granulométrie de l'ordre de 10 à 60 µm, de préférence de l'ordre de 10 à 36 µm ou de l'ordre de 25 à 45 µm.

3. Procédé de fabrication d'une pièce métallique, dans lequel la pièce est confectionnée à partir de poudre métallique et est consolidée par soudage ou frittage par couches, **caractérisé en ce qu'**une poudre métallique selon la revendication 1 ou 2 est utilisée comme poudre métallique.

4. Utilisation d'une poudre métallique selon la revendication 1 ou 2 dans un processus de fabrication à base de poudre, dans lequel une pièce est confectionnée à partir de la poudre métallique et est consolidée par soudage ou frittage par couches.
